# EUROPEAN PATENT SPECIFICATION

(11) **EP 3 451 608 B1**
(45) Date of publication and mention of the grant of the patent: **06.11.2019**
(21) Application number: 17189163.3
(22) Date of filing: 04.09.2017
(51) Int. Cl.: H04L 29/06, H04L 9/30

(54) **FILTER UNIT BASED DATA COMMUNICATION SYSTEM INCLUDING A BLOCKCHAIN PLATFORM**
FILTEREINHEIT BASIEREND AUF EINEM DATENKOMMUNIKATIONSSYSTEM MIT EINER BLOCKCHAIN-PLATTFORM
SYSTÈME DE COMMUNICATION DE DONNÉES À BASE D'UNITÉ DE FILTRE COMPRENANT UNE PLATE-FORME DE CHAÎNE DE BLOCS

(43) Date of publication of application: 06.03.2019
(73) Proprietor: Siemens Aktiengesellschaft, 80333 München (DE)
(72) Inventor: Falk, Rainer, 85586 Poing (DE)

(56) References cited:
- US-A1- 2015 312 188
- US-A1- 2017 046 638
- US-A1- 2017 063 789
- WENTING LI ET AL: "Towards Scalable and Private Industrial Blockchains", PROCEEDINGS OF THE ACM WORKSHOP ON BLOCKCHAIN, CRYPTOCURRENCIES AND CONTRACTS, 2 April 2017 (2017-04-02), pages 9-14, XP055397747, DOI: 10.1145/3055518.3055531 ISBN: 978-1-4503-4974-1

## Description

### BACKGROUND

In the present time of a rising demand for cross-company IT solutions, information between companies are to be transmitted in the form of transactions. In several cases, such as in the case of the Bitcoin technology or Smart Contracts, these transactions may be based on the blockchain technology, offering an open or public platform for sharing, executing, and reviewing the respective transactions.

In the case of such open transaction platforms, there is a risk that inadvertently sensitive company information or not released transactions or not duly approved transactions may be transmitted into an open transaction database, e.g. the blockchain database. This can e.g. occur by the fact that employees use a blockchain software, the right of which is not conferred to use, or by using a company-used blockchain platform, which is used in an inadmissible manner.

Patent document US 2017/063789 discloses a method for secured separation within a computer network. The method includes the step of: (i) providing a secure separation module between a low security computer network and a high security computer network; (ii) intercepting, by the secure separation module, any data directed from the low security computer network to the high security computer network; (iii) routing, by the secure separation module, the data to a first destination; (iv) authenticating the communication; (v) filtering the data using one or more filters; and (vi) communicating the data, only if it passes the one or more filters, to a destination computer network.

### SUMMARY

Therefore, there is a need to prevent invalid and/or unwanted data traffic from a first network to a second, blockchain-based network.

It is an object of the present application to provide a system and a respective method for performing data communication in between a first network and a second, blockchain-based network, which is adapted to prevent invalid and/or unwanted data traffic.

A system and a method according to the independent claims are provided. Further embodiments are defined in the dependent claims.

According to an embodiment, a system adapted for performing data communication is disclosed. The system comprises a first interface adapted to communicate with a first network. The system further comprises a filter unit. The system further comprises a second interface adapted to communicate with a second network connected to the first network via the filter unit, wherein the second network is adapted to operate as a blockchain platform. According to this, the filter unit is adapted to selectively permit data received from the first network via the first interface to be transmitted to the second network via the second interface.

Such an approach may be based on the finding that the arrangement of a filter unit in between a first network and a blockchain-based second network may provide a technical implementation enabling an additional restriction of the data traffic originating from the first network and reaching the second network. Since such a blockchain based second network may operate by processing data in an irreversible manner, such technical means may help to prevent publishing data which otherwise could not be deleted, or to prevent processing of transactions comprised within the data for which the effect of processing could not be reversed anymore. The filtering realizing the additional restriction can be defined independently of the blockchain logic for verifying the validity of transactions. This allows to flexibly define which transactions can be submitted by a firm to the blockchain based second network, e.g. to an open or public blockchain platform for processing. Company-specific authorizations, approvals, can be flexibly checked, without the blockchain platform being required to process company-internal permission information. Company-internal authorization services and authorization information can be easily integrated, without exposing the company-internal authorization information to an open or public blockchain platform. Changes within the organization of the firm can be reflected by modified filter rules, i.e. without requiring changes to the blockchain platform or to the data processed by the blockchain infrastructure.

The filtering of data before being submitted to the blockchain based second network, e.g., a blockchain platform or a blockchain infrastructure, for processing is required when using open or public blockchain platforms by a firm or in enterprise environments. In contrast to a conventional firewall, the purpose is not to prevent network attacks on the company network by limiting network communication, but to enforce rules on outgoing transactions that cannot be deleted or reversed once accepted and processed by the blockchain infrastructure. So, the invention enables the safe, controlled use of an open or public blockchain infrastructure. Incoming transactions can be filtered as well before importing the transactions in company-internal IT systems.

According to another embodiment, a method for performing data communication is disclosed. The method comprises selectively permitting data received from a first network to be transmitted to a second network. According to this method, the second network is operated as a blockchain platform based on the permitted data.

Such an approach may be based on selectively filtering data before reaching the blockchain based second network. Data, which are not determined as suitable for processing by the blockchain technology, may therefore be prevented reaching the second network, which may operate in an irreversible manner.

A network within the meaning of the present disclosure may refer to any set of nodes which enables a plurality of participants to perform data communication with each other. The network may be a public network or a private network. The network may or may not be based on a blockchain platform. The network may be connected to at least one further network. The network may irreversibly process the data based on blockchain techniques.

A filter unit within the meaning of the present disclosure may refer to any unit, which is adapted to separate first set of data from a second set of data. The data may comprise at least one transaction to be processed by a blockchain platform. Separation may take place in that the first set of data is permitted to pass the filter unit and the second set of data is not permitted to pass the filter unit. Here, separation may be controlled by a user input.

A blockchain platform within the meaning of the present disclosure may refer to any database implemented in a network, which is at least partly based on the blockchain technique. The blockchain may comprise a plurality of blocks comprising data related to transactions and/or Smart Contracts. Chaining of different blocks may be implemented by cryptographic hash values stored in each block, wherein each hash value may refer to data of a previous block.

In an embodiment of the system, the filter unit is adapted to selectively permit the data based on a data content and/or a data origin.

The provision of a unit adapted for filtering data based on its data content may thereby enable to control a distribution of information based on the level of confidentiality of these information. The provision of a unit adapted for filtering data based on its data origin may thereby enable to distribute data based on given regulations, such as a firm policy. For example, a policy may be compared with the data content and/or the data origin to decide whether to permit the data or not.

In another embodiment, the filter unit is adapted to selectively permit the data based on a user input.

Thereby, selection criteria of a filter unit may be adapted according to the present circumstances and the user's needs.

In another embodiment, the filter unit is part of a) a network firewall located at a transition in between the first network and the second network or b) a cloud-based service.

With respect to the network firewall, the filter unit may be implemented by preferably simple technical means. Pertaining to the cloud-based service, filtering data traffic may be outsourced from a present network connection, thereby saving resources of the present networks.

In another embodiment, the data comprises a transaction, which may be processed by the blockchain platform.

Thereby, the second network comprising the blockchain platform may be used as an openly accessible database, enabling any participants sharing and reviewing the transactions to be performed. The second network may be a permissioned blockchain platform that is accessible by a multitude of firms.

In another embodiment, the filter unit is adapted to perform the selective permission of the data comprising the transaction independent from or of other transactions, which have been received by the filter device previously.

Thereby, a reliable permission of transactions to be processed by the blockchain platform independent from or of a transaction protocol may be provided.

In another embodiment, the filter unit is adapted to perform the selective permission of the data comprising the transaction based on other transactions, which have been received by the filter unit previously.

Thereby, e.g. the amount of transactions processed by the blockchain platform previously may be taken into account for providing further transactions to the blockchain platform. As a matter of consequence, the number of transactions performed in a predefined time interval may be limited. Also, other properties of the earlier transactions may be taken into account, e.g., data content and/or data origin, etc. Heuristic rule sets for permitting the data may be developed.

In another embodiment, the data comprises a classification of the transaction and the selective permission of the filter unit is adapted to be based on the classification of the transaction.

Thereby, based on any transaction characteristic, different transactions can be handled in a different manner. The classification may parameterize certain details of the transaction such that different transactions can be easily compared.

In another embodiment, the classification of the transaction comprises a security label of the transaction.

Thereby, the level of confidentiality referring to a transaction may be taken into account for an evaluation, whether a transaction is provided for processing to the blockchain platform of the second network.

In another embodiment, the filter unit is adapted for receiving, from a transaction approval unit of the first network, instructions for blocking the transaction, e.g. if the transaction approval unit does not receive a predetermined number of approval messages from respective participants.

Thereby, the filter unit is adapted to be controlled - at least partly - by regulations implemented in the first network, which correspond to approvals of participants sharing the first network. These approvals to be given for transmitting a transaction to a blockchain platform may represent the authority of the respective participants in a community, e.g. a firm. As a matter of consequence, such an adaption may e.g. implement a given firm policy. The firm policy may also reflect regulations that allow the firm to comply with company rules or regulatory limitations.

In another embodiment, the system further comprises a labelling unit, which is adapted to label the data comprising the transaction permitted by the filter unit using a checksum, wherein the label is indicative of the respective filter unit of a plurality of filter units. The labelling unit may also label the transaction using another unique key, alternatively or additionally to the checksum. The checksum may be a cryptographic checksum, e.g. a message authentication code or a digital signature.

Thereby, any data received by the first network may be assigned to a specific filter unit, which is adapted to control permission of the data for reaching the second network. Therefore, these means may facilitate the inspection of filtering processes.

In another embodiment, the system further comprises a modification unit, which is adapted to modify the transaction permitted by the filter unit, wherein the modified transaction is transmitted to the second network via the second interface and the non-modified transaction is not transmitted to the second network via the second interface.

Thereby, the modified transaction, which is permitted to reach the blockchain platform, and the non-modified transaction, which is not permitted to reach the blockchain platform, may carry different information. As an example, information, which is to be available to participants of the first network, but which is not to be available to participants of the second network, may merely be included in the non-modified, but not in the modified, transaction. Consequently, these means may enable a desired distribution of information. Anonymisation is possible. Privacy-sensitive information may be filtered.

In another embodiment, the filter unit is further adapted to selectively permit data received from the second network to be transmitted to the first network.

Thereby, malware resided in the second network may be blocked from also reaching the first network. Furthermore, only transactions that comply with filter rules may be imported and may be processed in company-internal IT systems. In particular, only transactions complying with filter rules may be imported automatically. Other transactions may be rejected, or may require an explicit approval before importing them in a company-internal IT system.

In another embodiment, the first network is a private network and/or the second network is a public network.

Thereby, the filter unit may be implemented in filtering data traffic originating from a first network to a second network, wherein the first network comprises a smaller number of participants than the second network. Thus, these means are adapted to control the data traffic to different circles of participants.

In an embodiment of the method, the method is performed by a system according to any of the embodiments above.

Thereby, the method may be performed based on a preferably simple technical implementation.

A network firewall within the meaning of the present disclosure may refer to a security system in between different networks that controls the incoming and/or outgoing data traffic based on predetermined security rules. The data traffic may comprise transactions to be processed by a blockchain platform. The security rules may be controlled by a user input.

A cloud-based service within the meaning of the present disclosure may refer to any technical concepts implemented in a cloud-computing infrastructure. Hereby, it may be enabled to computing capabilities storing and processing data in either a privately owned cloud, or on a third-party server located in a data center in order to make data accessing mechanisms more efficient and reliable.

A security level within the meaning of the present disclosure may refer to a characteristic of a transaction, which refers to a requirement of controlling a transaction when transmitting from a first network to a second network. The security level of the transaction may be assigned by a participant of the first network. The security level may refer to a level of confidentiality of the transaction. For example, restricted information may be discriminated from top secret information, etc..

A private network within the meaning of the present disclosure may refer to a network accessible to a smaller or restricted number of participants than a public network. A private network may refer to a company-internal network. The private network may be adapted to be used for transmitting data to which a higher confidentiality is attributed.

A public network within the meaning of the present disclosure may refer to a network accessible to a larger number of participants than a private network. For example, unrestricted access may be provided to the public network. A public network may refer to an open network, but may also refer to a company-internal network. The public network may be adapted not to be used for transmitting data to which a higher confidentiality is attributed.

According to an embodiment, a computer program product comprises program code. The program code may be executed by at least one processor. Executing the program code causes the at least one processor to perform a method for performing data communication. The method comprises selectively permitting data received from a first network to be transmitted to a second network. The second network is operated as a blockchain platform based on the permitted data.

According to an embodiment, a computer program comprises program code. The program code may be executed by at least one processor. Executing the program code causes the at least one processor to perform a method for performing data communication. The method comprises selectively permitting data received from a first network to be transmitted to a second network. The second network is operated as a blockchain platform based on the permitted data.

The above summary is merely intended to give a short overview over some features of some embodiments and implementations and is not to be construed as limiting. Other embodiments may comprise other features than the ones explained above.

### BRIEF DESCRIPTION OF THE DRAWINGS

The above and other elements, features, steps and characteristics of the present disclosure will be more apparent from the following detailed description of embodiments with reference to the following figures:
- Figure 1: schematically illustrates a blockchain section, which may be assembled based on a system and a method according to the present disclosure.
- Figure 2: schematically illustrates another blockchain section, which may be assembled based on a system and a method according to the present disclosure.
- Figure 3: schematically illustrates a filter unit based data communication system according to various examples.
- Figure 4: represents a flowchart of a method performed by the data communication system according to various examples.

### DETAILED DESCRIPTION OF EMBODIMENTS

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings, which are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

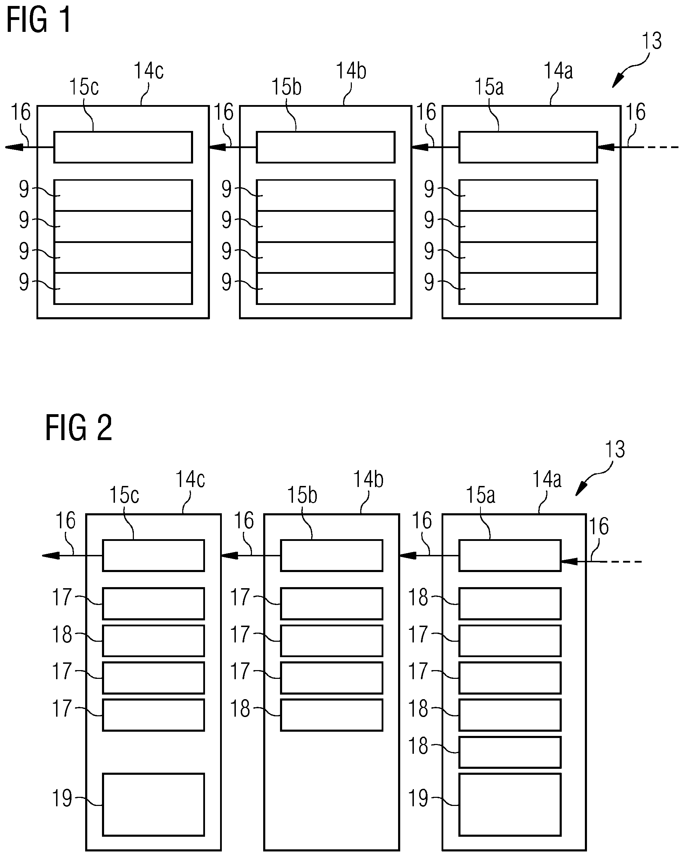

Figure 1 schematically illustrates a blockchain section, which may be assembled based on a system 1 and a method 100 according to the present disclosure.

According to this, such a blockchain 13 may comprise a plurality of blocks 14a-14c connected to each other. In such an assembling, each block 14a, 14b, 14c may be coupled with two neighboring blocks 14a-14c, wherein coupling is - according to Figure 1 - depicted as chain 16. A new block 14a-14c to be included in the blockchain 13 may be assembled at an open end of the chain 16 of the block chain 13. Each block 14a-14c may comprise a plurality of transactions 9 to be processed. The creation of the chain 16 coupling the blocks 14a-14c to assemble the blockchain 13 may be supported by hash values 15a-15c, each implemented in their respective block 14a-14c. Hereby, each hash value for 15a to 15c depends on the predecessor block 14a to 14c. Specifically, the respective hash value 15a-15c is evaluated based on the data of the respective predecessor block 14a-14c.

With respect to the transactions 9 implemented in each block 14a-14c, the program code may be implemented as a smart contract. The program code may carry information with respect to whether a transaction 9 is admissible. According to this, different business processes may be flexibly realized by a common blockchain infrastructure. Usually, a hash tree, e.g. a Merkle tree or a Patricia tree, may be used for storing the respective hash values in each of the blocks 14a-14c.

Figure 2 schematically illustrates another blockchain section, which may be assembled based on a system and a method according to the present disclosure.

According to this, the blockchain 13 comprises blocks 14a-14c, which are connected by chain 16. The creation of the blockchain 13 by assembling blocks 14a-14c by chain 16 is hereby supported by hash values 15a-15c, each of them is implemented in the respective block 14a-14c.

Specifically, each of the blocks 14a to 14c comprises specific configurations of the transactions 9. As an example, the transactions 9 may be configured as payment transaction 17, ownership transfer transaction 18 and register smart contract 19. Hereby, the transaction 9 may comprise further attributes, which may e.g. be adapted to indicate a receiver of a payment, an object and its new owner or a program code of a smart contract. Blockchain transactions may be used also to control an energy automation network. A transaction may cause an energy generator to feed a certain amount of electric energy into the energy grid, to cause an energy consumer to limit the energy consumption, or to perform a switching operation in the energy grid. The attributes of a blockchain transaction may indicate an electric device and the action to be performed by the device.

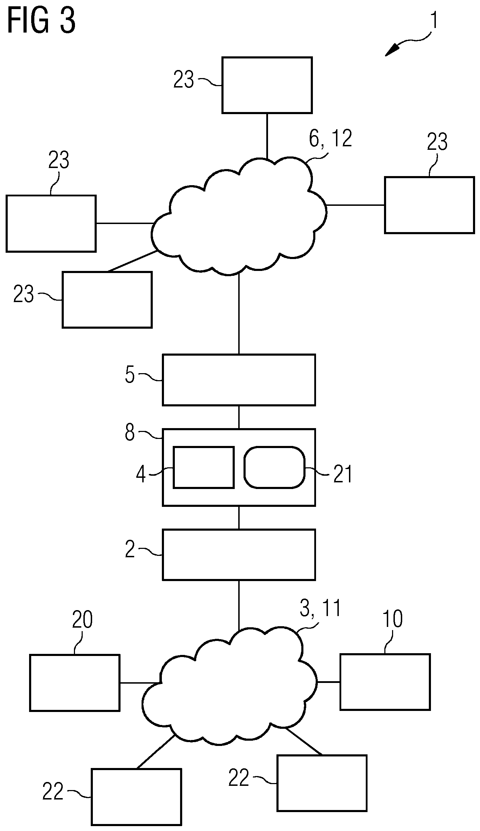

Figure 3 schematically illustrates a filter unit based data communication system 1 according to various examples.

According to this, the system 1 comprises at least one first interface 2 adapted to communicate with a first network 3. The first network 3 may be a private network 11, such as a firm network. Access to the private network 11 may be restricted. Any arbitrary number of first network nodes 22 may be provided by the first network 3.

In addition, the system 1 also comprises at least one second interface 5 adapted to communicate with a second network 6. The second network 6 may be a public network 12, such as the internet or any further network available to different firms and/or communities. Hereby, the second network 6 may be adapted to operate as a blockchain platform 7. Any arbitrary number of second network nodes 23 may be provided by the second network 6.

The first network 3 and the second network 6 may be connected to each other via a filter unit 4. The filter unit 4 may be adapted to selectively permit data received from the first network 3 via the first interface 2 to be transmitted to the second network 6 via the second interface 5. These data may comprise at least one transaction 9, which may be processed by the blockchain platform 7.

The filter unit 4 may be implemented in a network firewall 8, as depicted in Figure 3. Such a network firewall 8 may additionally comprise a memory 21 for storing rules. In addition, the filter unit 4 may also be implemented in a cloud-based service. Further, for filtering data, a cross-domain security solution may also be used.

The filter unit 4 may be adapted to selectively permit the data based on a data content. Such a data content may e.g. refer to the content of the transaction 9. The filter unit 4 may also be adapted to selectively permit the data based on a data origin. Such a data origin may refer to an origin of a transaction 9, e.g. a computer from which the transaction 9 is transmitted or a user logged in the respective computer. These transaction data may refer to attributes and/or smart contracts.

Further, the filter unit 4 may also be adapted to selectively permit the data based on a user input, which may change the filter criteria based on modified circumstances, such as a modified firm policy or modified public regulations.

The filter unit 4 may further be adapted to perform the selective permission of the data comprising the transaction 9 independent of other transactions 9, which have been received by the filter unit 4 previously. In addition, the filter unit 4 may also be adapted to perform the selective permission of the data comprising the transaction 9 based on other transactions 9, which have been received by the filter unit 4 previously. In the latter case, these means can be implemented in payment actions, which may only be admissible in the case that a total amount of money spent during a time interval remains below an admissible, predetermined threshold value.

Further, the filter unit 4 may be adapted to selectively permit data received from the second network 6 to be transmitted to the first network 3. In such a case, the respective filtering mechanism may operate bidirectional. Such a mechanism may e.g. be used for blocking data traffic originating from the public network 12 and flowing towards the private network 11. Such a blocked data traffic may e.g. be constructive with respect to malware adapted to damage the private network 11, such as a firm network. In addition, the filter unit 4 may also be adapted for receiving, from a transaction approval unit 10 of the first network 3, instructions for blocking the transaction 9, if the transaction approval unit 10 does not receive a predetermined number of approval messages from respective participants.

As can be deduced from Figure 3, the first network 3 configured as a private network 11 may additionally provide for a transaction classification unit 20. Based on this unit, the data may comprise a classification of the transaction 9, and the selective permission of the filter unit 4 may be adapted to be based on the classification of the transaction. Such a classification may e.g. comprise a security label of the transaction 9 and may be used to attribute a level of confidentiality to the respective transactions 9. In addition, the first network 3 configured as a private network 11 may additionally provide for a transaction approval unit 10 adapted to receive a plurality of approvals from different participants of the private network 11 before a transaction 9 is permitted reaching the blockchain platform 7.

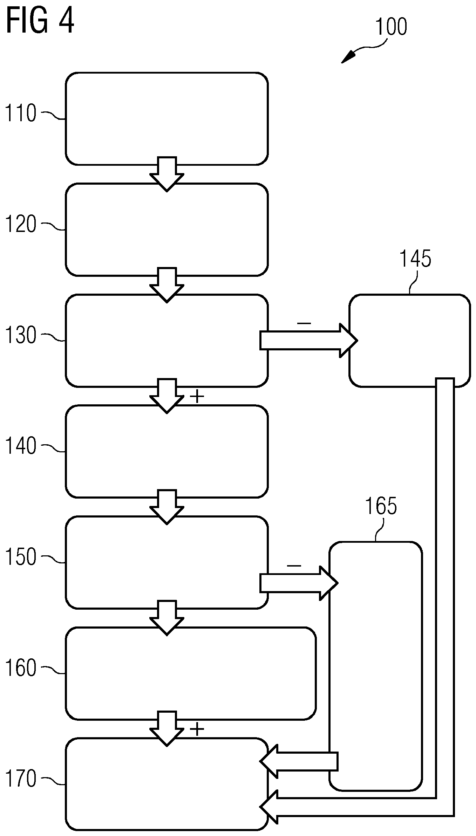

Figure 4 represents a flowchart of a method 100 performed by the data communication system 1 according to various examples, wherein - according to this example - the communicated data correspond to a transaction 9. Herein, 110, 150, 160, 165 and 170 refer to the common handling of transactions 9 to be performed in a blockchain environment.

At 110, a transaction 9 is released by a participant of the first network 3, e.g., a private network 11.

Subsequently at 120, the released transaction 9 is received by a filter unit 4 connected to the first network 3 via the first interface 2.

Subsequently at 130, the filter unit 130 examines whether the received transaction 9 is to be permitted to reach the blockchain platform 7. According to this, transactions 9 received from a first network 3 via a first interface 2 is selectively permitted by the filter unit 4.

In case that, based on 130, the transaction 9 is not permitted reaching the blockchain platform 7, the blockchain transaction is blocked at 145 - e.g., discarded or rejected. Otherwise and with respect to 140, the transaction 9 is forwarded to the blockchain platform 7 via a second interface 5.

At the blockchain platform 7, common transaction 9 handling is performed. The blockchain platform 7 checks the validity of the transaction 7 before including the transaction 9 in a block of the blockchain, confirming the transaction to be valid. At 150, the blockchain platform 7 examines whether the transaction 9 are valid. For this purpose, hash values 15a-15c may be taken into account, and smart contracts may be processed according to the common proceedings.

In case that, based on 150, the transaction 9 may not be validated, the non-valid transaction 9 is refused at 165. Otherwise, a block comprising the validated transaction 9 is attached to the blockchain 13 at 160 and the transaction 9 is performed.

Subsequently at 170, the method 100 is stopped.

## Claims

1. System (1) adapted for performing data communication, comprising
a first interface (2) adapted to communicate with a first network (3);
a transaction approval unit (10) of the first network (3); a filter unit (4); and
a second interface (5) adapted to communicate with a second network (6) connected to the first network (3) via the filter unit (4),
wherein the filter unit (4) is adapted to selectively permit data received from the first network (3) via the first interface (2) to be transmitted to the second network (6) via the second interface (5);
**characterized in that**:
the second network (6) being adapted to operate as a blockchain platform (7);
the data comprises at least one transaction (9) to be processed by the blockchain platform; and
the filter unit (4) is adapted for receiving, from the transaction approval unit (10) of the first network (3), instructions for blocking the transaction (9), if the transaction approval unit (10) does not receive a predetermined number of approval messages from respective participants.

2. System (1) according to claim 1, wherein the filter unit (4) is adapted to selectively permit the data based on a data content and/or a data origin.

3. System (1) according to any of claims 1 and 2, wherein the filter unit (4) is adapted to selectively permit the data based on a user input.

4. System (1) according to any of the preceding claims, wherein the filter unit (4) is part of a) a network firewall (8) located at a transition in between the first network (3) and the second network (6) or b) a cloud-based service.

5. System (1) according to any of the preceding claims, wherein the filter unit (4) is adapted to perform the selective permission of the data comprising the transaction (9) independent from other transactions (9), which have been received by the filter unit (4) previously.

6. System (1) according to any of claims 1-4, wherein the filter unit (4) is adapted to perform the selective permission of the data comprising the transaction (9) based on other transactions (9), which have been received by the filter unit (4) previously.

7. System (1) according to any of the preceding claims, wherein the data comprises a classification of the transaction (9), and wherein the selective permission of the filter unit (4) is adapted to be based on the classification of the transaction (9).

8. System (1) according to claim 7, wherein the classification of the transaction (9) comprises a security label of the transaction (9).

9. System (1) according to any of the preceding claims, further comprising a labelling unit, which is adapted to label the data comprising the transaction (9) permitted by the filter unit (4) using a checksum, wherein the label is indicative of the respective filter unit (4) of a plurality of filter units (4).

10. System (1) according to any of the preceding claims, further comprising a modification unit, which is adapted to modify the transaction (9) permitted by the filter unit (4), wherein the modified transaction is transmitted to the second network (6) via the second interface (5) and the non-modified transaction is not transmitted to the second network (6) via the second interface (5).

11. System (1) according to any of the preceding claims, wherein the filter unit (4) is further adapted to selectively permit data received from the second network (6) to be transmitted to the first network (3).

12. System (1) according to any of the preceding claims, wherein the first network (3) is a private network (11) and/or the second network (6) is a public network (12).

13. Method (100) for performing data communication, comprising:
selectively permitting (130) data received from a first network (3) to be transmitted to a second network (6);
**characterized in that**:
the second network (6) being operated as a blockchain platform (7) based on the permitted data;
the data comprises at least one transaction (9) to be processed by the blockchain platform; and
blocking the transaction (9), if a predetermined number of approval messages for the transaction (9) are not received.

14. Method according to claim 13, which is performed by a system (1) according to any of claims 1 to 12.

## Patentansprüche

1. System (1), welches zum Durchführen von Datenkommunikation eingerichtet ist und umfasst:
eine erste Schnittstelle (2), die dazu eingerichtet ist, mit einem ersten Netz (3) zu kommunizieren;
eine Transaktionsgenehmigungseinheit (10) des ersten Netzes (3);
eine Filtereinheit (4); und
eine zweite Schnittstelle (5), die dazu eingerichtet ist, mit einem zweiten Netz (6) zu kommunizieren, das mit dem ersten Netz (3) über die Filtereinheit (4) verbunden ist,
wobei die Filtereinheit (4) dazu eingerichtet ist, selektiv zu genehmigen, dass Daten, die vom ersten Netz (3) über die erste Schnittstelle (2) empfangen wurden, über die zweite Schnittstelle (5) an das zweite Netz (6) gesendet werden;
**dadurch gekennzeichnet, dass**:
das zweite Netz (6) dazu eingerichtet ist, als Blockchain-Plattform (7) betrieben zu werden;
die Daten wenigstens eine Transaktion (9) umfassen, die von der Blockchain-Plattform zu verarbeiten ist; und
die Filtereinheit (4) dazu eingerichtet ist, von der Transaktionsgenehmigungseinheit (10) des ersten Netzes (3) Anweisungen zum Sperren der Transaktion (9) zu empfangen, falls die Transaktionsgenehmigungseinheit (10) nicht eine vorbestimmte Anzahl von Genehmigungsnachrichten von jeweiligen Teilnehmern empfängt.

2. System (1) nach Anspruch 1, wobei die Filtereinheit (4) dazu eingerichtet ist, die Daten basierend auf einem Dateninhalt und/oder einem Datenursprung selektiv zu genehmigen.

3. System (1) nach einem der Ansprüche 1 und 2, wobei die Filtereinheit (4) dazu eingerichtet ist, die Daten basierend auf einer Benutzereingabe selektiv zu genehmigen.

4. System (1) nach einem der vorhergehenden Ansprüche, wobei die Filtereinheit (4) Teil a) einer Netzfirewall (8) ist, die an einem Übergang zwischen dem ersten Netz (3) und dem zweiten Netz (6) angeordnet ist, oder b) eines Cloud-basierten Dienstes ist.

5. System (1) nach einem der vorhergehenden Ansprüche, wobei die Filtereinheit (4) dazu eingerichtet ist, die selektive Genehmigung der Daten, welche die Transaktion (9) umfassen, unabhängig von anderen Transaktionen (9) vorzunehmen, welche zuvor durch die Filtereinheit (4) empfangen worden sind.

6. System (1) nach einem der Ansprüche 1 bis 4, wobei die Filtereinheit (4) dazu eingerichtet ist, die selektive Genehmigung der Daten, welche die Transaktion (9) umfassen, basierend auf anderen Transaktionen (9) vorzunehmen, welche zuvor durch die Filtereinheit (4) empfangen worden sind.

7. System (1) nach einem der vorhergehenden Ansprüche, wobei die Daten eine Klassifikation der Transaktion (9) umfassen und wobei die selektive Genehmigung der Filtereinheit (4) dazu eingerichtet ist, basierend auf der Klassifikation der Transaktion (9) zu erfolgen.

8. System (1) nach Anspruch 7, wobei die Klassifikation der Transaktion (9) ein Sicherheitsetikett der Transaktion (9) umfasst.

9. System (1) nach einem der vorhergehenden Ansprüche, welches ferner eine Etikettierungseinheit umfasst, welche dazu eingerichtet ist, die Daten, welche die von der Filtereinheit (4) genehmigte Transaktion (9) umfassen, unter Verwendung einer Prüfsumme zu etikettieren, wobei das Etikett für die jeweilige Filtereinheit (4) von mehreren Filtereinheiten (4) indikativ ist.

10. System (1) nach einem der vorhergehenden Ansprüche, welches ferner eine Modifikationseinheit umfasst, welche dazu eingerichtet ist, die von der Filtereinheit (4) genehmigte Transaktion (9) zu modifizieren, wobei die modifizierte Transaktion zum über die zweite Schnittstelle (5) zweiten Netz (6) übertragen wird und die nicht modifizierte Transaktion nicht über die zweite Schnittstelle (5) zum zweiten Netz (6) übertragen wird.

11. System (1) nach einem der vorhergehenden Ansprüche, wobei die Filtereinheit (4) ferner dazu eingerichtet ist, selektiv zu genehmigen, dass Daten, die vom zweiten Netz (6) empfangen wurden, zum ersten Netz (3) übertragen werden.

12. System (1) nach einem der vorhergehenden Ansprüche, wobei das erste Netz (3) ein privates Netz (11) ist und/oder das zweite Netz (6) ein öffentliches Netz (12) ist.

13. Verfahren (100) zum Durchführen von Datenkommunikation, welches umfasst:
selektives Genehmigen (130), dass Daten, die von einem ersten Netz (3) empfangen wurden, an ein zweites Netz (6) gesendet werden;
**dadurch gekennzeichnet, dass**:
das zweite Netz (6) basierend auf den genehmigten Daten als Blockchain-Plattform (7) betrieben wird;
die Daten wenigstens eine Transaktion (9) umfassen, die von der Blockchain-Plattform zu verarbeiten ist; und
die Transaktion (9) gesperrt wird, falls nicht eine vorbestimmte Anzahl von Genehmigungsnachrichten für die Transaktion (9) empfangen wird.

14. Verfahren nach Anspruch 13, welches von einem System (1) nach einem der Ansprüche 1 bis 12 durchgeführt wird.

## Revendications

1. Un système (1) adapté de façon à exécuter une communication de données, comprenant
une première interface (2) adaptée de façon à communiquer avec un premier réseau (3),
une unité d'approbation de transaction (10) du premier réseau (3),
une unité de filtrage (4), et
une deuxième interface (5) adaptée de façon à communiquer avec un deuxième réseau (6) raccordé au premier réseau (3) par l'intermédiaire de l'unité de filtrage (4),
dans lequel l'unité de filtrage (4) est adaptée de façon à permettre de manière sélective à des données reçues à partir du premier réseau (3) par l'intermédiaire de la première interface (2) d'être transmises au deuxième réseau (6) par l'intermédiaire de la deuxième interface (5),
**caractérisé en ce que** :
le deuxième réseau (6) est adapté de façon à fonctionner en tant que plateforme de chaîne de blocs (7),
les données comprennent au moins une transaction (9) à traiter par la plateforme de chaîne de blocs, et
l'unité de filtrage (4) est adaptée de façon à recevoir, à partir de l'unité d'approbation de transaction (10) du premier réseau (3), des instructions destinées au blocage de la transaction (9) si l'unité d'approbation de transaction (10) ne reçoit pas un nombre prédéterminé de messages d'approbation à partir de participants respectifs.

2. Le système (1) selon la revendication 1, dans lequel l'unité de filtrage (4) est adaptée de façon à autoriser de manière sélective les données en fonction d'un contenu des données et/ou d'une origine des données.

3. Le système (1) selon l'une quelconque des revendications 1 et 2, dans lequel l'unité de filtrage (4) est adaptée de façon à autoriser de manière sélective les données en fonction d'une entrée d'utilisateur.

4. Le système (1) selon l'une quelconque des revendications précédentes, dans lequel l'unité de filtrage (4) fait partie de a) un pare-feu de réseau (8) situé à une transition entre le premier réseau (3) et le deuxième réseau (6) ou b) un service à base de nuage.

5. Le système (1) selon l'une quelconque des revendications précédentes, dans lequel l'unité de filtrage (4) est adaptée de façon à exécuter l'autorisation sélective des données comprenant la transaction (9) indépendamment d'autres transactions (9) qui ont été reçues par l'unité de filtrage (4) antérieurement.

6. Le système (1) selon l'une quelconque des revendications 1 à 4, dans lequel l'unité de filtrage (4) est adaptée de façon à exécuter l'autorisation sélective des données comprenant la transaction (9) en fonction d'autres transactions (9), qui ont été reçues par l'unité de filtrage (4) antérieurement.

7. Le système (1) selon l'une quelconque des revendications précédentes, dans lequel les données comprennent une classification de la transaction (9), et dans lequel l'autorisation sélective de l'unité de filtrage (4) est adaptée de façon à être basée sur la classification de la transaction (9).

8. Le système (1) selon la revendication 7, dans lequel la classification de la transaction (9) comprend une étiquette de sécurité de la transaction (9).

9. Le système (1) selon l'une quelconque des revendications précédentes, comprenant en outre une unité d'étiquetage qui est adaptée de façon à étiqueter les données comprenant la transaction (9) autorisée par l'unité de filtrage (4) au moyen d'une somme de contrôle, l'étiquette étant indicative de l'unité de filtrage respective (4) d'une pluralité d'unités de filtrage (4).

10. Le système (1) selon l'une quelconque des revendications précédentes, comprenant en outre une unité de modification qui est adaptée de façon à modifier la transaction (9) autorisée par l'unité de filtrage (4), la transaction modifiée étant transmise au deuxième réseau (6) par l'intermédiaire de la deuxième interface (5) et la transaction non modifiée n'étant pas transmise au deuxième réseau (6) par l'intermédiaire de la deuxième interface (5).

11. Le système (1) selon l'une quelconque des revendications précédentes, dans lequel l'unité de filtrage (4) est adaptée en outre de façon à permettre de manière sélective à des données reçues à partir du deuxième réseau (6) d'être transmises au premier réseau (3).

12. Le système (1) selon l'une quelconque des revendications précédentes, dans lequel le premier réseau (3) est un réseau privé (11) et/ou le deuxième réseau (6) est un réseau public (12) .

13. Un procédé (100) d'exécution d'une communication de données, comprenant :
l'opération consistant à permettre de manière sélective (130) à des données reçues à partir d'un premier réseau (3) d'être transmises à un deuxième réseau (6),
**caractérisé en ce que** :
le deuxième réseau (6) est actionné en tant que plateforme de chaîne de blocs (7) en fonction des données autorisées,
les données comprennent au moins une transaction (9) à traiter par la plateforme de chaîne de blocs, et
le blocage de la transaction (9) si un nombre prédéterminé de messages d'approbation pour la transaction (9) ne sont pas reçus.

14. Le procédé selon la revendication 13 qui est exécuté par un système (1) selon l'une quelconque des revendications 1 à 12.
